# EUROPEAN PATENT SPECIFICATION

(11) **EP 0 498 792 B1**
(45) Date of publication and mention of the grant of the patent: **16.03.1994**
(21) Application number: 90900773.4
(22) Date of filing: 02.11.1989
(51) Int. Cl.: F16J 15/16

(54) **SEGMENTED SEAL FOR ROTARY EQUIPMENT**
SEGMENTIERTES ABDICHTUNGSSTÜCK FÜR ROTIERENDE VORRICHTUNG
JOINT D'ETANCHEITE SEGMENTE POUR EQUIPEMENT ROTATIF

(43) Date of publication of application: 19.08.1992
(73) Proprietor: VOLUND MILJOTEKNIK A/S, DK-2605 Brondby (DK)
(72) Inventor: HANSEN, Ib, Tj rntved, DK-2850 Naerum (DK); ANDERSEN, Nils, Verner, DK-3250 Gilleleje (DK)
(74) Representative: Raknes, Tor Vaa (NO)
(86) International application number: DK8900257
(87) International publication number: WO9106794

(56) References cited:
- DE-C- 2 923 600
- US-A- 4 502 702
- Patent Abstracts of Japn, ol 3, No 140, M81
- Patent Abstracts of Japn, Vol 5, No 155, M 90

## Description

### TECHNICAL FIELD

The present invention relates to a sealing assembly of the kind set forth in the preamble of claim 1.

### BACKGROUND ART

A sealing assembly of the kind mentioned above is known from the document DE-C-29 23 600. In this known arrangement, the angle between the oblique sealing surfaces and the axis of relative rotation is of the order of 60 degrees. This angle is presumably well suited to the purpose for which this particular sealing arrangement is to be used, but would cause problems, if such a sealing arrangement were to be used in machinery, in which there is considerable relative movement in the axial direction between the cooperating members, such as in rotary kilns, in which the rotary part is subject to considerable thermal expansion and contraction. An angle of 60 degrees - in this connection a rather "steep" angle, would cause the axial components of the reaction forces between the cooperating oblique sealing surfaces to be excessive, possibly causing damage to the machinery or at least causing a considerable increase in the friction between the cooperating sealing surfaces - both the oblique ones and those extending in a radial plane, thus increasing the load on the drive means.

### DISCLOSURE OF THE INVENTION

It is the object of the present invention to provide a sealing assembly of the kind initially referred to, in which the reaction force described above is reduced to such an extent that the sealing arrangement may be used in rotary kilns and similar equipment without any of the disadvantages referred to above, and this object is achieved with a sealing assembly of the kind referred to above, which according to the present invention is characterized by the features set forth in the characterizing clause of claim 1.

With this arrangement, the axial reaction forces are substantially reduced whilst maintaining the requisite force for achieving the sealing effect desired.

Advantageous embodiments of the sealing assembly according to the present invention, the effects of which are explained in the following detailed portion of the present specification, are set forth in claims 2 and 3.

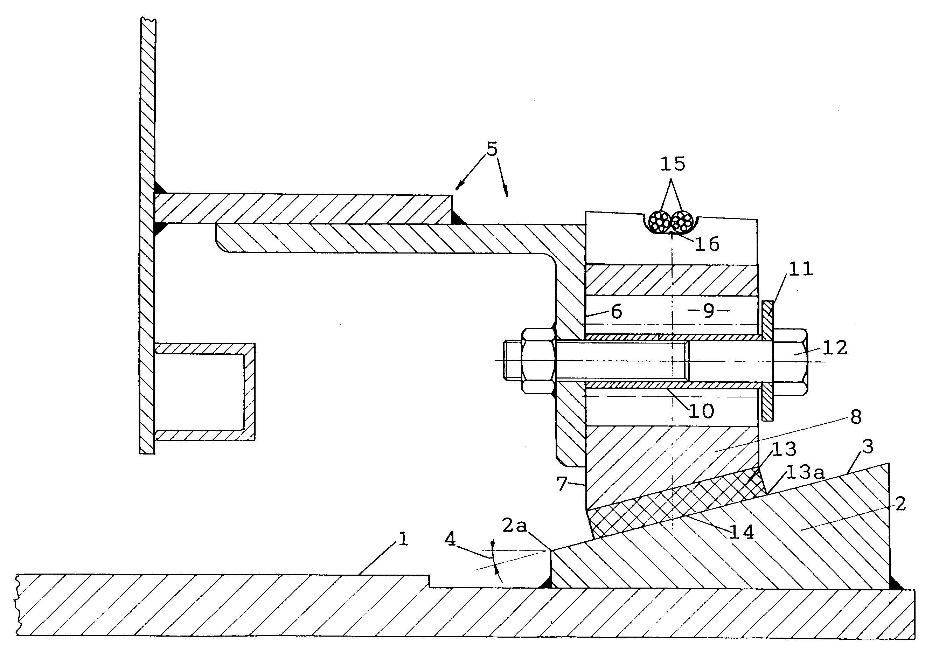

### BRIEF DESCRIPTION OF THE DRAWING

In the following detailed specification the present invention is explained with reference to the sole Figure of the drawing, which is a sectional view of a part of a rotary drum and a part of a stationary housing cooperating with said drum to form a seal therebetween.

### DESCRIPTION OF THE PREFERRED EMBODIMENT

The one end shown of the rotary drum 1 belonging to a rotary kiln is on its outside provided with a sealing ring 2, the latter as shown being welded to the outside of the drum 1 and itself having on the outside a conical sealing surface 3, in the example shown forming an oblique angle 4 of substantially 15 degrees with the axis of rotation (not shown) of the rotary drum 1.

The Figure also shows that end of a stationary housing 5, with which the rotary drum 1 cooperates to form a sealed joint.

On the side of the housing 5 facing to the right in the drawing there is formed a substantially radially extending sealing surface 6 cooperating with a sealing surface 7 on one of a number of sealing segments 8 each extending in continuation of each other all the way around the sealing ring 2 on the drum 1.

In each sealing segment 8 there is formed a "long hole" or slot 9, through which extends a tubular bushing 10. The bushing 10 is slightly longer than the thickness in the axial direction of its sealing segment 8, so that there is a slight distance in the operating condition shown from the right-hand side of the segment 8 to the opposing side of a disk 11 being held in the position shown by a screw 12 also holding the bushing 10 securely in position relative to the housing 5.

On the side facing the rotary drum 1, each segment 8 is provided with a sealing pad 13 of metal or other material suitable for sliding engagement with the sealing surface 3 on the sealing ring 2.

The side of the sealing pad 13 facing the sealing ring 2 forms a sealing surface 14 cooperating sealingly with the sealing surface 3.

In the operating condition, all the sealing segments 8 are held in sealing engagement with the sealing ring 2 by suitable, permanently acting means, in the example shown a cable 15 engaging with suitable grooves or notches 16 on the side of each segment 8 facing away from the rotary drum 1. The cable 15, which should extend at least once around the set of segments 8, is constantly held under tension by suitable means, such as springs or weights (not shown).

The reaction force created by the force, with which the cable 15 urges each sealing segment 8 towards the sealing ring 2, will comprise a component directed to the left in the Figure, i.e. a component urging each sealing segment 8 with its sealing surface 7 into sealing engagement with the sealing surface 6 on the housing 5. The reason for this is, of course, the oblique angle 4 that the mating sealing surfaces 3 and 14 form with the axis of rotation of the rotary drum 1.

In operation, the drum 1 may expand or contract both in the radial and the axial directions, resulting in corresponding changes of position of the sealing surface 3 on the sealing ring 2. Due to the considerable radial dimension of the "long hole" or slot 9, the sealing segments 8 are able to follow any such change in position, and also to follow any irregularities in the sealing surface 3 during the rotary movement of the drum 1.

As will be evident from the above, the disk 11 does not serve to hold the sealing segment 8 in position during normal operation. When, however, the part of the rotary drum 1 shown is to be moved to the right and/or the part of the housing 5 shown is to be moved to the left, thus making the seal inoperative, the disk 11 serves to prevent the sealing segment 8 from being pulled away from the sealing surface 6 by more than a few millimetres.

When the drum 1 and the housing 5 - or the parts of same shown in the Figure - have been moved away from each other in the direction mentioned, the tension in the cable 15 will have moved the sealing segments 8 radially inward, until the radially outermost part of each slot 9 abuts against the bushing 10, thus preventing further radially inward movement. With suitable dimensioning of the various components, the movement will be halted in a position, in which the right-hand edges 13a of the sealing pads 13 will lie on a circle with a greater radius than the circle, on which the left-hand edges 2a of the sealing ring 2 are situated. Thus, it is not necessary to move all the sealing segments 8 radially outwards to permit the entry of the sealing ring 2 between them, as the sealing ring 2 with its conical surface 3 will force the sealing segments 8 apart, eventually to take up a position like the one shown in the Figure.

## Claims

1. A sealing assembly for effecting a seal between a first member (5) and a second member (1) adapted to rotate relative to each other about an axis, said assembly being of the kind comprising
a) a substantially radial first sealing surface (6) on said first member (5),
b) a plurality of arcuate sealing segments (8) each having a first sealing surface (7) cooperating sealingly with said first sealing surface (6) on the first member (5) and a second sealing surface (14) cooperating sealingly with
c) a second, non-radial sealing surface (3) on said second member (1),
d) axially acting urging means for permanently urging the arcuate sealing segments (8) into sealing engagement with the first sealing surface (6) on the first member (5), and
e) radially acting urging means (15) for permanently urging the arcuate sealing segments (8) into sealing engagement with the second sealing surface (3) on the second member (1), whereas
f) the second sealing surfaces (3,14) on the second member (1) and on each sealing segment (8) are disposed at an oblique angle (4) with said axis of rotation so as to converge or diverge relative thereto in such a direction, that a component of the reaction force created by the force of the radially acting urging means (15) urging the sealing segment against the second sealing surface (3) on the second member (1) urges the sealing segment (8) against the first sealing surface (6) on the first member (5),
characterized in
g) that said oblique angle (4) is in the range 5-25 degrees, preferably in the range 10-20 degrees, most preferably substantially 15 degrees.

2. A sealing assembly according to claim 1,
characterized in that the extent of radial movement of the arcuate sealing segments (8) in the direction, in which they are urged by said radially acting urging means (15), is limited in such a manner, that when the first or second member (5,1) has been withdrawn axially from the second or first member (1,5) respectively in the direction of convergence or divergence of said oblique angle (4) respectively, the sealing segments (8) will not prevent the two members (5,1) from being replaced in their relative operating position.

3. A sealing assembly according to claim 1 or 2,
characterized by means (11) not normally engaging the arcuate sealing segments (8), but adapted to limit the extent of their movement away from the first member (5), preferably to an extent of the order of a few millimetres.

## Patentansprüche

1. Eine Dichtungsanordnung zum Bewirken einer Dichtung zwischen einem ersten Glied (5) und einem zweiten Glied (1), die dazu angepaßt sind, relativ zueinander um eine Achse zu rotieren, wobei die Anordnung von der Art ist, die umfaßt
a) eine im wesentlichen radiale erste Dichtungsoberfläche (6) auf dem ersten Glied (5),
b) eine Vielzahl von bogenförmigen Dichtungssegmenten (8), jedes mit einer ersten Dichtungsoberfläche (7), die dichtend mit der ersten Dichtungsoberfläche (6) auf dem ersten Glied (5) und einer zweiten Dichtungsoberfläche (14) zusammenwirkt, die dichtend mit
c) einer zweiten nicht radialen Dichtungsoberfläche (3) auf dem zweiten Glied (1) zusammenwirkt,
d) einem axial wirkenden Zwangsmittel zum permanenten Zwingen der bogenförmigen Dichtungssegmente (8) in dichtenden Eingriff mit der ersten Dichtungsoberfläche (6) auf dem ersten Glied (5) und
e) einem radial wirkenden Zwangsmittel (15) zum permanenten Zwängen der bogenförmigen Dichtungssegmente (8) in dichtenden Eingriff mit der zweiten Dichtungsoberfläche (3) auf dem zweiten Glied (1), während
f) die zweiten Dichtungsoberflächen (3, 14) auf dem zweiten Glied (1) und auf jedem Dichtungssegment (8) in einem schrägen Winkel (4) zu der Achse der Rotation angeordnet sind, um so relativ dazu in einer derartigen Richtung zu konvergieren oder divergieren, daß eine Komponente der Reaktionskraft, die durch die Kraft des radial wirkenden Zwangsmittel (15), das das Dichtungssegment gegen die zweite Dichtungsoberfläche (3) auf dem zweiten Glied (1) drängt, das Dichtungssegment (8) gegen die erste Dichtungsoberfläche (6) auf dem ersten Glied (5) drängt,
dadurch **gekennzeichnet,** daß
g) der schräge Winkel (4) in dem Bereich 5 - 25° vorzugsweise in dem Bereich 10 - 20°, vorzugsweise insbesondere im wesentlichen 15° liegt.

2. Eine Dichtungsanordnung nach Anspruch 1,
dadurch **gekennzeichnet,**
daß das Ausmaß der radialen Bewegung der bogenförmigen Dichtungssegmente (8) in der Richtung, in welche sie durch das radial wirkende Zwangsmittel (15) gedrängt werden, in einer derartigen Weise begrenzt ist, daß, wenn das erste oder zweite Glied (5, 1) axial von dem zweiten bzw. ersten Glied (1, 5) in der Richtung der Konvergenz oder Divergenz des schrägen Winkels (4) respektive zurückgezogen worden ist, die Dichtungssegmente (8) die zwei Glieder (5, 1) nicht daran hindern werden, in ihrer relativen Betriebsposition ersetzt zu werden.

3. Eine Dichtungsonordnung nach Anspruch 1 oder 2,
**gekennzeichnet** durch
ein Mittel (11), das normalerweise nicht mit den bogenförmigen Dichtungssegmenten (8) in Eingriff steht, aber dazu ausgebildet ist, das Ausmaß ihrer Bewegung weg von dem ersten Glied (5) zu begranzen, vorzugsweise zu einem Maß von der Größenordnung einiger Millimeter.

## Revendications

1. Un ensemble d'étanchéité pour réaliser une étanchéité entre un premier organe (5) et un second organe (1) susceptibles de tourner l'un par rapport à l'autre autour d'un axe, ledit ensemble étant du genre comprenant:
a) une première surface d'étanchéité sensiblement radiale (6) sur ledit premier organe (5),
b) une pluralité de segments d'étanchéité arqués (8), chacun comportant une première surface d'étanchéité (7) coopérant de façon étanche avec ladite première surface d'étanchéité (6) sur le premier organe (5) et une seconde surface d'étanchéité (14) coopérant de façon étanche avec
c) une seconde surface d'étanchéité non radiale (3) sur ledit second organe (1),
d) des moyens de sollicitation agissant axialement pour solliciter de façon permanente les segments d'étanchéité arqués (8) en contact d'étanchéité avec la première surface d'étanchéité (6) sur le premier organe (5), et
e) des moyens de sollicitation agissant radialement (15) pour solliciter de façon permanente les segments d'étanchéité arqués (8) en contact d'étanchéité avec la seconde surface d'étanchéité (3) sur le second organe (1), dans lequel
f) les secondes surfaces d'étanchéité (3,14) sur le second organe (1) et sur chaque segment d'étanchéité (8) sont disposées en faisant un angle oblique (4) avec ledit axe de rotation de façon à converger ou à diverger par rapport à cet axe dans une direction telle qu'une composante de la force de réaction, créée par la force des moyens de sollicitation agissant radialement (15) et sollicitant les segments d'étanchéité contre la seconde surface d'étanchéité (3) sur le second organe (1), sollicite le segment d'étanchéité (8) pour le repousser contre la première surface d'étanchéité (6) sur le premier organe (5),
caractérisé en ce que
g) ledit angle oblique (4) est compris entre 5 et 25 degrés, de préférence entre 10 et 20 degrés, et est plus préférablement d'environ 15 degrés.

2. Un ensemble d'étanchéité selon la revendication 1, caractérisé en ce que l'étendue du déplacement radial des segments d'étanchéité arqués (8) dans la direction dans laquelle ils sont sollicités par lesdits moyens de sollicitation (15) agissant radialement est limitée de telle façon que, lorsque le premier ou le second organe (5, 1) a été retiré axialement respectivement du second ou du premier organe (1, 5) dans la direction respective de convergence ou de divergence dudit angle oblique (4), les segments d'étanchéité (8) n'empêchent pas les deux organes (5,1) d'être replacés dans leur position relative de fonctionnement.

3. Un ensemble d'étanchéité selon la revendication 1 ou 2, caractérisé par des moyens (11) qui ne viennent normalement pas en contact avec les segments d'étanchéité arqués (8) mais qui sont susceptibles de limiter l'étendue de leur déplacement d'éloignement du premier organe (5), de préférence à une course de quelques millimètres.
